**Europäisches Patentamt**

**European Patent Office**

**Office européen des brevets**

(11) Veröffentlichungsnummer: **0 051 716**
A2

## EUROPÄISCHE PATENTANMELDUNG

(21) Anmeldenummer: **81105294.3**

(51) Int. Cl.³: **G 11 B 27/00**

(22) Anmeldetag: **08.07.81**

(30) Priorität: **06.11.80 DE 3041813**

(71) Anmelder: **Norddeutsche Mende Rundfunk KG, Funkschneise 5-9, D-2800 Bremen-Hemelingen (DE)**

(43) Veröffentlichungstag der Anmeldung: **19.05.82 Patentblatt 82/20**

(84) Benannte Vertragsstaaten: **AT BE DE FR GB IT NL**

(72) Erfinder: **Trowitzsch, Christian, Katrepeler Landstrasse 49 A, D-2800 Bremen (DE)**

(54) Verfahren zum Aufbringen einer Kennung auf ein Videoband.

(57) Die Erfindung betrifft ein Verfahren zum Aufbringen einer Kennung auf ein Videoband und zum Lesen dieser Kennung.

Mittels eines Codierers wird die Kennung in informationsfreie Teile von Austastlücken geschrieben, und bei der Wiedergabe wird mittels eines Decoders die Kennung vom Signal getrennt.

Die Kennung erfolgt digital.

Nach Trennung vom Signal wird die Kennung auf einem Display oder auf dem Bildschirm angezeigt.

ACTORUM AG

Europäische Patentanmeldung der Norddeutsche Mende Rundfunk KG

D-2800 Bremen 44 (Akte NE 2/81)

7. Juli 1981
G33/Bg

---------------

Verfahren zum Aufbringen einer Kennung auf ein Videoband.

Die Erfindung betrifft ein Verfahren zum Aufbringen einer Kennung auf ein Videoband und zum Lesen dieser Kennung.

Stand der Technik

Bei den Videorecordern für den Heimgebrauch sind mechanische Bandzählwerke bekannt, bei denen die Länge des jeweils benutzten Bandanteils in einfacher Weise durch mechanische Verkopplung mit einem der Wickelteller angezeigt wird.

Diese auch bei normalen Tonbandgeräten seit Anbeginn übliche Methode ist sehr ungenau. Geringe Veränderungen im Wickelzug des Bandes stören die richtige Zuordnung von benutzter Bandlänge und Anzeige des Bandzählwerkes. Das Wiederauffinden bestimmter Stellen der Aufzeichnung, z.B. Anfänge oder Enden einer von mehreren Darbietungen

0051716

7. Juli 1981
G33/Bg

Europäische Patentanmeldung der Norddeutsche Mende Rundfunk KG,
D-2800 Bremen 44   (Akte NE 2/81)

- - - - - - - -

ist schwierig, vor allem auch dadurch, daß bei jedem Band zunächst
der Bandanfang mit der Zählerstellung Null in Übereinstimmung gebracht werden muß.

Bei professionellen Magnetaufzeichnungsgeräten, wie sie z.B. in
Rundfunkanstalten benutzt werden, wird daher neben der eigentlichen
Aufzeichnungsspur noch eine weitere sogenannte Merkspur auf das
Band geschrieben, mit der mittels des sogenannten EBU-Zeitcodes
jede beliebige Bandstelle bildgenau wieder aufgefunden werden kann
(Rundfunk-technische Mitteilungen 1978, Heft 1, Seite 2, überarbeitete Fassung eines Vor-trages, gehalten auf der Jahrestagung der
FKTG in Kiel, vom 19. bis 23. September 1978).

In der Fersehtechnik ist es bekannt, informationsfreie Teile des
Fernsehsignals, insbesondere Austastlücken studio- und senderseitig
zur Übertragung zusätzlicher Informationen zu benutzen (Sonderdruck
aus Fernseh- und Kinotechnik Nr. 8/75, Nutzung des Fernsehkanals
für die Übertragung zusätzlicher Informationen, Vortrag gehalten auf
der Jahrestagung der Fernseh- und Kinotechnischen Gesellschaft am
16. Oktober 1974 in München.

Es ist auch bekannt, Fernsehsendungen mit einem Code zu kennzeichnen. Der Code kann z.B. eine Länderkennung, die Sendeanstalt, die
Programm-Nummer und eine allgemeine Kennzahl erhalten (Funkschau
1980, Heft 14, Seite 70, Wilhelm Kölbl, Kennzahl für jede Fernsehsendung? ).

Europäische Patentanmeldung der Norddeutsche Mende Rundfunk KG,
D-2800 Bremen 44  (Akte NE 2/81)

------------

In Erweiterung dieser Senderkennung ist auch ein Kennungssystem vorgeschlagen worden, mit dem die Senderkennung u.a. auch zur Steuerung von empfangsseitig angeordneten Videorecordern benutzt werden kann. Die Daten werden hier über einen zweiten Tonträger übertragen (Funktechnik Nr. 8/1979, Vorschläge für die Kennung von Fernseh-Programmen, Seite T 385, mittlere Spalte).

Bei Bildplatten ist es bekannt, jedes der ca. 45.000 Bilder einzeln abrufen zu können (Funkschau 1973, Heft 25, Seite 954, mittlere Spalte 4. und 5. Zeile, HeinzBahr, Das VLP-System).

Bei Bildplatten ist es weiterhin bekannt, Prüfzeilen zu verwenden (Funkschau 1974, Heft 25, Seite 976, Bild 13, Ein Bildplattensystem mit Laseraufzeichnung).

Aufgabe

Es besteht die Aufgabe, auch bei Heimvideorecordern beliebiger und auch älterer Bauart ein rasches, bildgenaues Wiederauffinden von Aufzeichnungsstellen zu ermöglichen.

Lösung der Aufgabe

Die Lösung der Aufgabe wird mit dem im Kennzeichen des Anspruchs 1 beschriebenen Verfahren gegeben.

Europäische Patentanmeldung der Norddeutsche Mende Rundfunk KG,
D-2800 Bremen 44  (Akte NE 2/81)

---------

Vorteile

Das Verfahren läßt sich mit allen auf dem Markt befindlichen Videorecordern, auch älteren und bereits vorhandenen, auch nachträglich,
durchführen.

Bei ferngesteuerten Videorecordern wird die Fernsteuerung überhaupt
erst sinnvoll, wenn der Bandstand weithin lesbar (Display, Bildschirm) und zudem noch bildgenau angezeigt wird.

Es können alle Bilder einzeln nummeriert werden. Bei 25 Vollbildern
je Sekunde sind dies 90.000 Vollbilder je Sekunde. Bei einem Vierstundenband müssen also 360.000 Vollbilder gekennzeichnet werden.
Dies ist mit einem 19-bit-Wort überaus leicht möglich, da in einer
einzigen Prüfzeile ca. 150 bit untergebracht werden können.

An der Stelle von Bildern können auch Szenen gekennzeichnet werden,
indem z.B. alle Bilder derselben Szene die gleiche Kennziffer erhalten.

Mit Hilfe eines Suchlaufs lassen sich sowohl Einzelbilder bei Vollbildkennzeichnung als auch Anfänge und Enden von Szenen bei Szenenkennzeichnung leicht automatisch finden. Das Arbeiten im Heimstudio
mit einer eigenen Kamera und dem damit verbundenen sehr häufigen
Szenenwechsel, auch zum Zwecke der Nachvertonung usw., wird mit
dem erfindungsgemäßen Verfahren überhaupt erst sinnvoll.

Europäische Patentanmeldung der Norddeutsche Mende Rundfunk KG,
D-2800 Bremen 44 (Akte NE 2/81)

-----------

Bei Anwendung eines Suchlaufs kann in Weiterbildung der Erfindung diejenige Kennung, bei der das Videoband gestoppt werden soll, entweder direkt oder auch mittels einer Fernbedienung in einen Speicher eingeschrieben werden. Eine zwischen den Decoder 5 und dem Speicher angeordnete Koinzidenzschaltung liefert ein Stoppsignal, sobald Koinzidenz zwischen der vorgegebenen Kennung und der vom Decoder 5 abgelieferten Kennung besteht.

Speicher und/oder Koinzidenzschaltung können entweder im Videorecorder, im Fernsehgerät oder auch in einem Zusatzgerät untergebracht sein.

Erläuterung der Erfindung

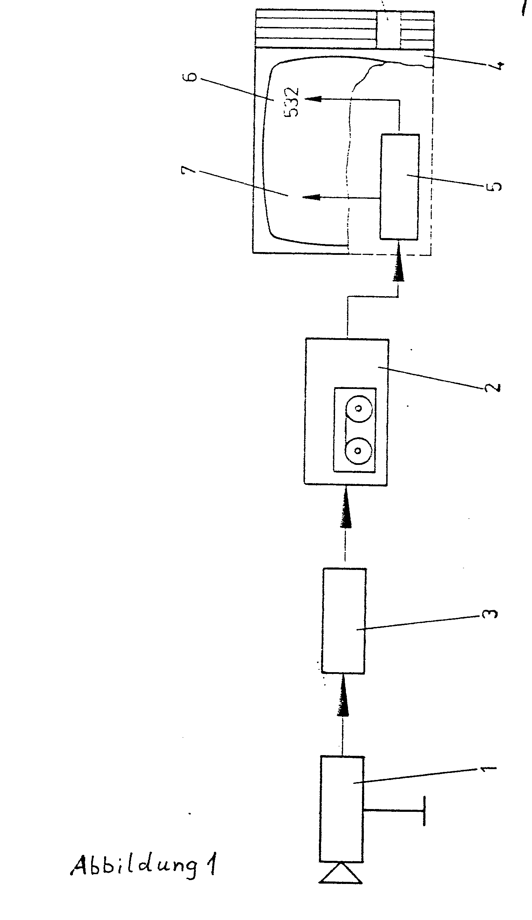

Anhand der Abbildung wird die Erfindung näher erläutert. Das gezeigte Ausführungsbeispiel zeigt eine Kamera 1, z.B. eine solche, wie sie für Heimstudioaufnahmen erhältlich ist.

Zwischen Kamera 1 und Videorecorder 2 ist ein Codierer 3 geschaltet, der in das von der Kamera 1 gelieferte Signal vorzugsweise in eine geeignete Leerzeile des Bildrücklaufs die gewünschte Kennung hineinsetzt. Es können Einzelbilder, Szenen, Markierungen für eine Nachvertonung, usw. gekennzeichnet werden.

Der Codierer 3 ist nicht nur auf eine Zusammenarbeit mit der Video-

Europäische Patentanmeldung der Norddeutsche Mende Rundfunk KG,
D-2800 Bremen 44 (Akte NE 2/81)

----------

kamera beschränkt. Er kann mit Vorteil auch zur Kennzeichnung von Fernsehsendungen, z.B. Art der Sendung, Anfang und Ende, usw. dienen, solange senderseitig eine Programm-Kennung noch nicht eingeführt ist.

Im Ausführungsbeispiel enthält das angeschlossene Fernsehgerät 4 einen eingebauten Decoder 5. Dieser entnimmt dem dem Videorecorder 2 entnommenen Signal die dort in einer Leerzeile eingeschriebene Kennung, formt sie entsprechend um und schreibt sie z.B. in Form von Ziffern 6, auf den Bildschirm 7, auf den auch der sonstige Bildinhalt geschrieben wird, der vom Decoder 5 über die bekannten Mittel zur Verstärkung, der Synchronisation, usw., die im Ausführungsbeispiel der besseren Übersicht halber weggelassen wurden, dem Bildschirm 7 zugeliefert wird.

Anstatt auf dem Bildschirm kann die Kennung auch auf einem Display 8 angezeigt werden, das auch im Videorecorder 2 angeordnet sein kann.

Zum Zwecke der einfacheren Nachrüstung können auch Codierer 3 und Decoder 5 eine vom Fernsehgerät getrennte, von außen anschließbare bauliche Einheit bilden.

Codierer 3 und Decoder 5 können beide auch im Fernsehgerät oder auch im Videorecorder eingebaut sein.

0051716

7. Juli 1981

G33/Bg

Europäische Patentanmeldung der Norddeutsche Mende Rundfunk KG,

D-2800 Bremen 44 (Akte NE 2/81)

-----------

Codierer 3 und Decoder 5 sind vorteilhafterweise so ausgebildet, daß Kompatibilität mit der kommenden Programm- und Senderkennung der Rundfunkanstalten zumindest zum Teil besteht.

Europäische Patentanmeldung der Norddeutsche Mende Rundfunk KG,
D-2800 Bremen 44  (Akte NE 2/81)

------------

Patentansprüche

1. Verfahren zum Aufbringen einer Kennung auf ein Videoband und zum Lesen dieser Kennung, dadurch gekennzeichnet, daß während der Aufnahme die Kennung mittels eines Codierers (3) in informationsfreie Teile von Austastlücken geschrieben wird und daß während der Wiedergabe mittels eines Decoders (5) die Kennung vom Signal getrennt wird.

2. Verfahren nach Anspruch 1, dadurch gekennzeichnet, daß die Kennung in digitaler Form aufgezeichnet wird.

3. Verfahren nach Anspruch 1 und 2, dadurch gekennzeichnet, daß die Kennung nach Trennung vom Signal einem Display (8) und/oder dem Bildschirm (7) des angeschlossenen Fernsehempfängers (4) zwecks Anzeige zugeführt wird.

4. Verfahren nach Anspruch 3, dadurch gekennzeichnet, daß ein Stopp-Signal für das Videoband ausgelöst wird, sobald durch eine Koinzidenzschaltung Koinzidenz zwischen der vom Decoder (5) gelieferten Kennung und einer in einen Speicher eingeschriebenen, vorgegeben Kennung festgestellt wird.

5. Verfahren nach Anspruch 3 und 4, dadurch gekennzeichnet, daß die vorzugebende Kennung fernbedienbar in den Speicher eingeschrieben wird.

Abbildung 1